# EUROPEAN PATENT SPECIFICATION

(11) **EP 0 538 928 B1**
(45) Date of publication and mention of the grant of the patent: **27.12.1995**
(21) Application number: 92203049.9
(22) Date of filing: 05.10.1992
(51) Int. Cl.: B09B 3/00, C02F 9/00, C02F 3/34, C02F 1/62

(54) **Method and device for cleaning soil polluted by at least one heavy metal**
Verfahren und Vorrichtung zur Reinigung mit wenigstens einem Schwermetall kontaminierten Erdreiches
Procédé et dispositif de nettoyage de terres contaminées avec au moins un métal lourd

(30) Priority: 21.10.1991 BE 9100972
(43) Date of publication of application: 28.04.1993
(73) Proprietor: VLAAMSE INSTELLING VOOR TECHNOLOGISCH ONDERZOEK, afgekort V.I.T.O., onderneming van openbaar nut onder de vorm van een n.v., 2400 Mol (BE)
(72) Inventor: Diels, Ludo, B-2520 Oelegem (BE); Carpels, Mark, B-2400 Mol (BE); Geuzens, Pierre, B-3960 Bree (BE); Mergeay, Max, W-2470 Retie (BE); Rymen, Theo, B-2490 Balen (BE)
(74) Representative: Debrabandere, René

(56) References cited:
- EP-A- 0 251 562
- EP-A- 0 349 348
- WO-A-90/10602
- DE-A- 3 928 427
- US-A- 4 843 007
- CHEMICAL ABSTRACTS, vol. 97, no. 1, 5 July 1982, Columbus, Ohio, US; abstractno. 3348h, page 340 ;column L ;
- DATABASE WPIL Section Ch, Week 8305, Derwent Publications Ltd., London, GB;Class D15, AN 83-11894K
- 'Handboek Bodemsaneringen' 1985 , STAATSUITGEVERIJ , DEN HAAG NL

## Description

The invention relates to a method for cleaning soil polluted by at least one heavy metal.

It is known to clean such soil by extracting the heavy metals in a first step and to treat the effluents from the extraction in an ion exchanger or by microorganisms in a second step.

Because of the two steps this method is not only time-consuming, but it gives as result a ground which has become biologically worthless. Environmentally damaging substances are necessary for the extraction and the cleaned ground is completely sterile. Furthermore the remnants of heavy metals which still remain are just those which are biologically available and can be absorbed by the plants.

This invention is intended to remedy these disadvantages and to provide a method for cleaning soil polluted by at least one heavy metal which is rather simple, uses less environmentally damaging substances and gives a cleaned soil which can theoretically still be used for agricultural purposes, is not sterile and can therefore be reused.

For this purpose a suspension of the soil in water is brought into contact with heavy metal resistant bacteria of the species Alcaligenes eutrophus in a concentration of more than 10⁷ cells per millilitre and a carbon source with a pH of between 5.5 and 9.5 and after a time the mixture is allowed to settle, after which the sediment is separated from the upper layer.

The fact that these bacteria can be loaded up with at least one heavy metal is in itself known, but up until now these bacteria were only used for this property in waste water treatment. The invention makes productive use of two rather surprising additional properties of these bacteria, namely that they have poor flocculation properties but a simple floatability.

Another use of bacteria of the species Alcaligenes eutrophus is disclosed in US-A-4.843.007; specific cultures of these bacteria are used for biode-grading halogenated organic waste, particularly polychlorinated biphenyls.

In a particular embodiment of the invention the upper layer is further subjected to a physical separation in polluted bacterial sludge and water.

This physical separation after the sedimentation can be either a floatation or a centrifugation.

The soil can itself comprise sufficient nutrients for the bacteria. In a notable embodiment of the invention such nutrients can however be added to the soil suspension.

In a suitable embodiment of the invention the soil suspension is left in contact with the aforementioned bacteria for 8 to 48 hours for the sedimentation.

This duration is dependent upon the specific properties of the soil.

In a preferably applied embodiment of the invention after a first incubation in a mixing tank the soil suspension is continuously added to the mixing tank, and the overflow from the mixing tank is continuously carried to a sedimentation tank where the overflow is allowed to settle.

In this embodiment, once the incubation period has ended, the cleaning can take place continuously.

The invention also relates to a device which is particularly suitable for the application of the method according to any of the preceding embodiments.

The invention therefore relates to a device for cleaning soil polluted by at least one heavy metal, characterised in that it comprises a mixing tank for the mixing of a suspension of the soil and bacteria of the species Alcaligenes eutrophus which accumulate at least one heavy metal, which mixing tank is provided with an overflow, a sedimentation tank and a pipe which connects the overflow to the sedimentation tank.

It suitably also comprises a physical separation device to which the top of the sedimentation tank is connected in order to separate the overflow there from into bacterial sludge and water.

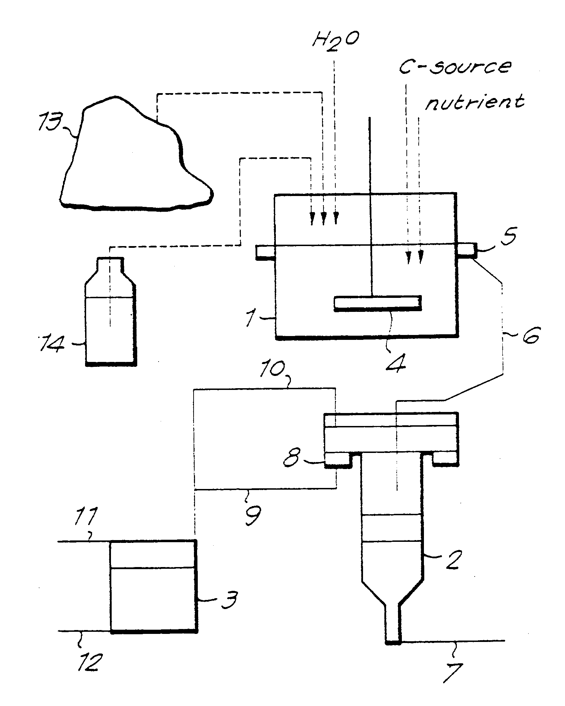

Other details and advantages of the invention will appear from the following description of a method and device for cleaning soil polluted by at least one heavy metal according to the invention. This description is only given as an example and does not restrict the invention. The reference figures relate to the attached drawing which schematically shows a device for cleaning soil polluted by at least one heavy metal according to the invention.

The device shown in the sole figure essentially comprises a mixing tank 1, a sedimentation tank 2 and a floatation tank 3.

A stirrer 4 which ensures both the mixing and the aeration of the contents of the tank is disposed in the mixing tank 1. This mixing tank 1 is provided with an overflow 5. This overflow 5 is connected by a pipe 6 to the top of the lower situated sedimentation tank 2 so that the overflowing suspension flows continuously through gravity towards the sedimentation tank 2.

The sedimentation tank 2 has a funnel-shaped lower part to which a drainage pipe 7 connects for the removal of the sediment. The upper layer consists of a liquid fraction and a foam fraction. On top the sedimentation tank has an overflow 8 to which a drainage pipe 9 connects for the removal of the liquid fraction. The foam fraction floating on top can be removed via a drainage pipe 10. Both drainage pipes 9 and 10 come together and connect to a common part on the top of the floatation tank 3.

On top of the floatation tank 3 a drainage pipe 11 connects for the removal of heavily polluted biomass and sludge components and underneath a drainage pipe 12 for the removal of the remaining water.

In order to clean an amount of soil 13 polluted by heavy metals this is placed in the mixing tank 1 into which an amount of water has previously been put which comprises 0.8 to 1.5 wt. % lactic acid or acetic acid as carbon source. With the assistance of the stirrer 4 an homogeneous suspension is obtained. The soil/water ratio is so selected that the pulp density is the maximum percentage whereby mechanical stirring is still possible and is preferably around 10%.

While stirring is continued 10 vol. % of a pre-culture of heavy metal resistant bacteria of the species Alcaligenes eutrophus, in particular the strain Alcaligenes eutrophus, CH34, is added to the suspension from a bottle 14, so that the cell concentration in the suspension amounts to more than 10⁷. This pre-culture was cultivated in an environment 284 gluconate with the following composition: (per litre)

| | |
|---|---|
| Tris-HCl (pH 77) | 6.06 g |
| NaCl (J.T.Baker) | 4.68 g |
| KCl (J.T.Baker) | 1.49 g |
| NH₄Cl (J.T.Baker) | 1.07 g |
| Na₂SO₄ (J.T.Baker) | 0.43 g |
| MgCl₂.6H₂O (U.C.B.) | 0.20 g |
| CaCl₂.2H₂O (J.T.Baker) | 0.03 g |
| Na₂HPO₄.12H₂O (J.T.Baker) | 0.02 g |
| Fe(NH₄)-citrate (U.C.B.) | 0.23 g |
| SL 7 (spore elements) | 1.0 ml |

whereby SL 7 has the following composition per litre:

| | |
|---|---|
| HCl (25%) (Merck ) | 1.3 ml |
| ZnCl₂ (U.C.B.) | 0.070 g |
| MnCl₂.4H₂O (U.C.B.) | 0.100 g |
| H₃BO₃ (M & B ) | 0.062 g |
| CoCl₂.6H₂O (U.C.B.) | 0.190 g |
| CuCl₂.2H₂O (J.T.Baker) | 0.017 g |
| NiCl₂.6H₂O (U.C.B.) | 0.024 g |
| Na₂MoO₄.2H₂O (U.C.B.) | 0.036 g |

It is diluted to slightly less than 1 litre with bidistilled water, brought to pH 7 with 0.1 N HCl and/or 0.1 NaOH, and further diluted to 1 litre. 20 g of Bacto-agar (Difco lab. no. 0140-01) is added and it is sterilised for 20 minutes at a temperature of 120 degrees Celsius.

The aforementioned environment 284 is a minimum environment. It is low in salt so that few interferences occur with heavy metals. Depending on the composition of the soil, certain components may be omitted.

Heavy metal resistant bacteria of the aforementioned type are described in the as yet unpublished European patent application no. 91-400986.5 of 12 April 1991.

Such bacteria have also been thoroughly examined in particular with regard to their resistance to heavy metals. This has been among others described by Mergeay M. et al. in "Alcaligenes eutrophus CH34 is a facultative chemolithotroph with plasmid-bound resistance to heavy metals". 1985 J. Bacteriol. 162 328-334". It is been established that Alcaligenes eutrophus CH34 carries two large plasmids which determine the resistance to Cd⁺⁺, Co⁺⁺, Zn⁺⁺, Hg⁺⁺, Tℓ⁺, Cu⁺⁺, Pb⁺⁺ (pMOL30, 240 kb) and CO⁺⁺, Zn⁺⁺, Ni⁺⁺, CrO₄--, Tℓ⁺ (pMOL28, 165 kb). According to Nies D. et al., in "Cloning of plasmid genes encoding resistance to cadmium, zinc and cobalt in Alcaligenes eutrophus" Bacteriol, 169 4865-4868) a DNA fragment (in pMOL30) is responsible for the resistance to cadmium, zinc and cobalt. Another gene group would code for the resistance to copper and lead. Both plasmids comprise a mercury transposon (Diels L. et al., 1985, "Mercury transposons from plasmids governing multiple resistance to heavy metals in Alcaligenes eutrophus CH34", Arch. Int. Physiol. Biochim. 93, B27-B28; Diels et al., 1989, "Large plasmids governing multiple resistances to heavy metals: a genetic approach" Toxic. Environm. Chem. 23, 79-89).

Further publications of Diels L. et al., are "Isolation and characterization of resistant bacteria to heavy metals from mining areas of Zaire", 1988, Arch. Int. Physiol. Biochim. 96, B13; "Detection of heterotrophic bacteria with plasmid-bound resistances to heavy metals from Belgian industrial sites", 1988, Arch. Int. Physiol. Biochim. 96, B14; "DNA probe-mediated detection of resistant bacteria from soils highly polluted by heavy metals", 1991 Appl. Environm. Microbiol. 56, 1485-1491).

That in certain physiological circumstances Alcaligenes eutrophus can accumulate and precipitate heavy metals also appears from "Accumulation and precipitation of Cd and Zn ions by Alcaligenes eutrophus strains", Biohydrometallurgy (1989) 369-377 by Diels L.; "Isolation and identification of bacteria living in environments severely contaminated with heavy metals", 7th International Conference on Heavy Metals in the Environment, 12-15 September 1989, Geneva, by Diels L. et al.

A culture of Alcaligenes eutrophus, CH34 was deposited on 20 September 1986 with AMERICAN TYPE CULTURE COLLECTION (ATCC) 12301 Parklawn Drive, Rockville, Maryland 20852, USA, in the name of Dr. Max Mergeay and CEN/SCK (Vito). The number 43123 was allocated to this registration. On 4 February 1991 an application was submitted to transform this registration into a registration according to the Treaty of Budapest.

These bacteria show the property that they can be loaded up with heavy metals via accumulation and crystallisation on the cell surface area. They show a poor flocculation capacity through which they remain strongly in suspension and do not sediment along with the soil. They cause a good separation between soil and suspension. Apparently the bacteria make a type of polyelectrolytes or they have themselves polyelectrolytic properties which ensure that the soil material will sediment perfectly.

Mixing is effected during the whole incubation time, which amounts from 8 to 48 hours. Usually the aeration, necessary for the aerobic growth of the bacteria, through the stirring alone is already sufficient, but if necessary, air can be blown into the mixing tank.

With the introduction of the pre-culture it is ensured that the pH is greater than 5.5. Through the action of the bacteria the pH will increase, without exceeding 9.5.

The polluted ground in most cases comprises sufficient nutrients for the bacteria. If necessary or desired a nutrient stream, which in particular contains nitrogen and phosphorus, can be added to the mixing tank 1. The amount of nutrients is dependent upon the type of soil and the nature of the pollution.

As soon as the incubation has taken place a change over is effected to a continuous regime and a flow of the above described soil suspension is continuously added, whereby the suspension is however achieved outside the mixing tank 1. An amount of lactic acid or acetic acid and in case of need nutrient is also continuously added, all of which so that aeration, pH, feeding of the bacteria continue to satisfy the above mentioned conditions and the time the soil suspension remains in the mixing tank amounts to between 8 and 48 hours, depending upon the soil specification. As a result of the interaction between the bacteria and the soil the sedimentation properties of the polluted soil particles are so altered that the sedimentation thereof is counteracted.

The more suspension that is added, the more a removal of suspension takes place via the overflow 5 which is carried via the pipe 6 to the sedimentation tank 2.

It is ensured that the time spent in this sedimentation tank amounts from 45 minutes to 3 hours. Through the faster sedimentation of the cleaner soil particles and the much slower sedimentation of the polluted bio sludge, a separation into a pure under course and a strongly polluted suspension which forms the upper layer is obtained.

The under course is removed via the drainage pipe 7. This under course consists of purified soil from which the bio-available heavy metals have been removed. The dry material content lies above 50%. The soil is reusable as humus.

The upper layer consists of a liquid fraction which overflows in the overflow 8 and a foam fraction floating there on. The two fractions are removed separately via the drainage pipes 9 and 10 and are brought together in the floatation tank 3. A layer of foam can also float on the suspension in the mixing tank 1 and provisions, for example a fat separator, can be present in order to skim off this layer of foam.

The floatation in the floatation tank is made to take place by adding salts as flocculation agent such as 3% NaCl together with 1 g/l of the product on the market under the name of acyl 27. Because of this a thickened suspension of strongly polluted biomass develops which floats on clean water. The clean water is removed via the drainage pipe 12. The suspension is removed via the drainage pipe 11, after which it is dehydrated in classical manner such as by drying, filtration or centrifugation.

The invention will be further illustrated on the basis of the following examples:

### Example 1.

Garden soil from the Kempen polluted with heavy metals is mixed with water which contains 0.8 wt. % acetic acid into a suspension with a pulp density of 10%. This suspension is mixed in a 10 litre mixing tank with 1 litre of a pre-culture of Alcaligenes eutrophus CH34 in environment 284 gluconate. After an incubation of 24 hours a change over is effected to a continuous regime and the soil suspension remains in the mixing tank for 10 hours. This regime is maintained for a week.

The overflow from the mixing tank was removed to the sedimentation tank 2, and remained therein for 45 minutes.

The pH in the mixing tank amounted to an average of 7.82.

The amounts of cadmium and zinc in mg/kg are shown in the following table:

| | Zinc | Cadmium |
|---|---|---|
| in the polluted soil: | 2075 | 18.86 |
| in the sediment: | 1000 | 1.15 |
| in the upper layer: | 26772 | 250.40 |

The dry substance in the sediment amounted to 72.8%.

### Example 2.

The method from example 1 was repeated, but with a less polluted soil, with lactic acid as carbon source, with an incubation time of 10 hours and 45 minutes spent in the sedimentation tank.

The amounts of cadmium and zinc in mg/kg are shown in the following table:

| | Zinc | Cadmium |
|---|---|---|
| in the polluted soil: | 881 | 13 |
| in the sediment: | 563 | 5.7 |
| in the upper layer: | 4200 | 134 |

The dry substance in the sediment amounted to 50%.

The above described cleaning is very simple and relatively fast. The cleaned soil is reusable. The concentration of heavy metals such as cadmium in the polluted fraction is afterwards relatively high. A very low water pollution through the increased pH and the bacteria bonding is also obtained.

The present invention is in no way restricted to the embodiments described above and within the scope of the present patent application many changes can be applied to these embodiments.

In particular it is not necessary to change over to a continuous operation after the incubation. For example with small amounts after the mass the whole suspension can at once be subjected to the sedimentation. The incubation and the sedimentation can then even be performed in a same tank.

Also the sequence of the introductions of the various constituents into the mixing tank can be altered.

## Claims

1. Method for cleaning soil polluted by at least one heavy metal, characterised in that a suspension of the soil in water is brought into contact with heavy metal resistant bacteria of the species Alcaligenes eutrophus in a concentration of more than 10⁷ cells per millilitre and a carbon source with a pH of between 5.5 and 9.5 and after a time the mixture is allowed to settle, after which the sediment is separated from the upper layer.

2. Method according to the preceding claim, characterised in that the upper layer is further subjected to a physical separation in polluted bacterial sludge and water.

3. Method according to the preceding claim, characterised in that the physical separation of the upper layer obtained after sedimentation is performed by a floatation.

4. Method according to claim 2, characterised in that the physical separation of the upper layer obtained after sedimentation is performed by a centrifugation.

5. Method according to any one of the preceding claims, characterised in that nutrients for the bacteria are also added to the soil suspension.

6. Method according to any one of the preceding claims, characterised in that the soil suspension is left in contact with the aforementioned bacteria for 8 to 48 hours for the sedimentation.

7. Method according to any one of the preceding claims, characterised in that after a first incubation in a mixing tank the soil suspension is continuously added to the mixing tank, and the overflow from the mixing tank is continuously carried to a sedimentation tank where the overflow is allowed to settle.

8. Method according to the preceding claim, characterised in that for the incubation in the mixing tank a pre-culture of heavy metal resistant Alcaligenes eutrophus in a suitable environment is added in a volume ratio of 1 l of pre-culture per 10 l suspension (when starting up the system).

9. Method according to claims 6 and 8, characterised in that during the continuous operation after the incubation the soil suspension is passed through the mixing tank with such flow rate that the time spent in the sedimentation tank is between 8 and 48 hours.

10. Method according to any one of the preceding claims, characterised in that the necessary aeration is provided during the contact with the bacteria.

11. Method according to any one of the preceding claims, characterised in that the contact with the bacteria in the mixing tank is performed under continuous stirring.

12. Method according to any one of the preceding claims, characterised in that sedimentation is allowed to occur for 45 minutes to 3 hours.

13. Method according to any one of the preceding claims, characterised in that as carbon source at least one of the substances from the group formed by lactic acid and acetic acid is added.

14. Method according to the preceding claim, characterised in that 0.8 to 1.5 % of the carbon source, calculated on the amount of water, is introduced into the mixing tank.

15. Method according to any one of the preceding claims, characterised in that a soil suspension is used with a pulp density of maximum the percentage which still allows stirring.

16. Method according to any one of the preceding claims, characterised in that the soil suspension is brought into contact with a pre-culture of Alcaligenes eutrophus CH34.

17. Device for cleaning soil polluted by at least one heavy metal, characterised in that it comprises a mixing tank for the mixing of a suspension of the soil and bacteria of the species Alcaligenes eutrophus which accumulate at least one heavy metal, which mixing tank is provided with an overflow, a sedimentation tank and a pipe which connects the overflow to the sedimentation tank.

18. Device according to the preceding claim, characterised in that it also comprises a physical separation device to which the top of the sedimentation tank is connected in order to separate the overflow therefrom into bacterial sludge and water.

19. Device according to the preceding claim, characterised in that the physical separation device is a floatation tank.

20. Device according to claim 18, characterised in that the physical separation device is a centrifugation device.

## Patentansprüche

1. Verfahren zur Reinigung mit wenigstens einem Schwermetall kontaminierten Erdreiches, dadurch gekennzeichnet, daß eine Suspension des Erdreichs in Wasser mit schwermetallresistenten Bakterien der Spezies Alcaligenes eutrophus in einer Konzentration von mehr als 10⁷ Zellen pro Milliliter und einer Kohlenstoffquelle mit einem pH-Wert zwischen 5,5 und 9,5 in Kontakt gebracht wird und man die Mischung nach einiger Zeit absetzen läßt, wonach der Rückstand von der oberen Schicht getrennt wird.

2. Verfahren gemäß dem vorgenannten Anspruch, dadurch gekennzeichnet, daß die obere Schicht weiterhin einer physikalischen Trennung in kontaminierten Bakterienschlamm und Wasser unterworfen wird.

3. Verfahren gemäß dem vorgenannten Anspruch, dadurch gekennzeichnet, daß die physikalische Trennung der nach dem Absetzen erhaltenen oberen Schicht durch Flotation durchgeführt wird.

4. Verfahren gemäß Anspruch 2, dadurch gekennzeichnet, daß die physikalische Trennung der nach dem Absetzen erhaltenen oberen Schicht durch Zentrifugieren durchgeführt wird.

5. Verfahren gemäß einem der vorgenannten Ansprüche, dadurch gekennzeichnet, daß der Erdreichsuspension auch Nährstoffe für die Bakterien zugesetzt werden.

6. Verfahren gemäß einem der vorgenannten Ansprüche, dadurch gekennzeichnet, daß die Erdreichsuspension zum Absetzen 8 bis 48 Stunden lang in Kontakt mit den vorgenannten Bakterien belassen wird.

7. Verfahren gemäß einem der vorgenannten Ansprüche, dadurch gekennzeichnet, daß nach einer ersten Inkubation in einem Mischtank die Erdreichsuspension dem Mischtank kontinuierlich zugesetzt wird und der Überlauf vom Mischtank kontinuierlich einem Absetztank zugeführt wird, wo man diesen Überlauf sich absetzen läßt.

8. Verfahren gemäß dem vorgenannten Anspruch, dadurch gekennzeichnet, daß für die Inkubation im Mischtank eine Vorkultur von schwermetallresistenten Alcaligenes eutrophus in einem geeigneten Milieu in einem Volumenverhältnis von 1 l Vorkultur zu 10 l Suspension hinzugefügt wird (beim Starten des Systems).

9. Verfahren gemäß Ansprüchen 6 und 8, dadurch gekennzeichnet, daß während der kontinuierlichen Bearbeitung nach der Inkubation die Erdreichsuspension mit einer solchen Durchflußrate durch den Mischtank geleitet wird, daß die im Absetztank verbrachte Zeit zwischen 8 und 48 Stunden beträgt.

10. Verfahren gemäß einem der vorgenannten Ansprüche, dadurch gekennzeichnet, daß für die erforderliche Belüftung während des Kontakts mit den Bakterien gesorgt wird.

11. Verfahren gemäß einem der vorgenannten Ansprüche, dadurch gekennzeichnet, daß der Kontakt mit den Bakterien im Mischtank unter ständigem Rühren durchgeführt wird.

12. Verfahren gemäß einem der vorgenannten Ansprüche, dadurch gekennzeichnet, daß man das Absetzen 45 Minuten bis 3 Stunden lang stattfinden läßt.

13. Verfahren gemäß einem der vorgenannten Ansprüche, dadurch gekennzeichnet, daß als Kohlenstoffquelle zumindest eine der Substanzen aus der von Milchsäure und Essigsäure gebildeten Gruppe zugesetzt wird.

14. Verfahren gemäß dem vorgenannten Anspruch, dadurch gekennzeichnet, daß 0,8 bis 1,5 % der Kohlenstoffquelle, berechnet auf die Wassermenge, in den Mischtank gegeben wird.

15. Verfahren gemäß einem der vorgenannten Ansprüche, dadurch gekennzeichnet, daß eine Erdreichsuspension mit einer Trübedichte maximal des Prozentsatzes, der noch ein Rühren gestattet, verwendet wird.

16. Verfahren gemäß einem der vorgenannten Ansprüche, dadurch gekennzeichnet, daß die Erdreichsuspension mit einer Vorkultur von Alcaligenes eutrophus CH34 in Kontakt gebracht wird.

17. Vorrichtung zur Reinigung mit wenigstens einem Schwermetall kontaminierten Erdreichs, dadurch gekennzeichnet, daß sie einen Mischtank für das Mischen einer Suspension des Erdreichs und Bakterien der Spezies Alcaligenes eutrophus, die zumindest ein Schwermetall akkumulieren, umfaßt, welcher Mischtank mit einem Überlauf, einem Absetztank und einer Leitung, die den Überlauf mit dem Absetztank verbindet, versehen ist.

18. Vorrichtung gemäß dem vorgenannten Anspruch, dadurch gekennzeichnet, daß sie auch eine physikalische Abscheidevorrichtung umfaßt, mit der das Oberteil des Absetztanks verbunden ist, um den Überlauf hiervon in Bakterienschlamm und Wasser zu trennen.

19. Vorrichtung gemäß dem vorgenannten Anspruch, dadurch gekennzeichnet, daß die physikalische Abscheidevorrichtung ein Flotationstank ist.

20. Vorrichtung gemäß Anspruch 18, dadurch gekennzeichnet, daß die physikalische Abscheidevorrichtung eine Zentrifugiervorrichtung ist.

## Revendications

1. Procédé pour épurer un sol pollué par au moins un métal lourd, caractérisé en ce qu'on amène une suspension de sol dans de l'eau en contact avec des bactéries résistant aux métaux lourds de l'espèce Alcaligenes eutrophus en une concentration qui n'est pas supérieure à 10⁷ cellules par millilitre et avec une source de carbone dont le pH se situe entre 5,5 et 9,5; après un certain temps, on laisse le mélange se déposer; après quoi, on sépare le sédiment de la couche supérieure.

2. Procédé selon la revendication précédente, caractérisé en ce qu'on soumet en outre la couche supérieure à une séparation physique en boues bactériennes polluées et en eau.

3. Procédé selon la revendication précédente, caractérisé en ce que l'on effectue la séparation physique de la couche supérieure obtenue après la sédimentation, par flottation.

4. Procédé selon la revendication 2, caractérisé en ce qu'on effectue la séparation physique de la couche supérieure obtenue après la sédimentation, par centrifugation.

5. Procédé selon l'une quelconque des revendications précédentes, caractérisé en ce que l'on ajoute également, à la suspension de sol, des nutriments pour les bactéries.

6. Procédé selon l'une quelconque des revendications précédentes, caractérisé en ce qu'on laisse la suspension de sol en contact avec les bactéries susmentionnées pendant un laps de temps de 8 à 48 heures à des fins de sédimentation.

7. Procédé selon l'une quelconque des revendications précédentes, caractérisé en ce que, après une première incubation dans uné cuve de mélange, on ajoute la suspension de sol en continu dans la cuve de mélange et on amène en continu le trop-plein du réservoir de mélange dans une cuve de sédimentation où on laisse se déposer le trop-plein.

8. Procédé selon la revendication précédente, caractérisé en ce que, pour l'incubation dans la cuve de mélange, on ajoute une préculture d'Alcaligenes eutrophus résistant aux métaux lourds dans un environnement approprié, dans un rapport volumique de 1 l de préculture par 10 l de suspension (lors du démarrage du système).

9. Procédé selon les revendications 6 et 8, caractérisé en ce que, au cours de la mise en oeuvre en continu, après l'incubation, on fait passer la suspension de sol à travers la cuve de mélange à un débit tel que le temps de séjour dans la cuve de sédimentation se situe entre 8 et 48 heures.

10. Procédé selon l'une quelconque des revendications précédentes, caractérisé en ce qu'on procure l'aération nécessaire lors de la mise en contact avec les bactéries.

11. Procédé selon l'une quelconque des revendications précédentes, caractérisé en ce qu'on met en oeuvre le contact avec les bactéries dans la cuve de mélange en procurant une agitation en continu.

12. Procédé selon l'une quelconque des revendications précédentes, caractérisé en ce qu'on laisse la sédimentation s'effectuer pendant un laps de temps de 45 minutes à 3 heures.

13. Procédé selon l'une quelconque des revendications précédentes, caractérisé en ce que, comme source de carbone, on ajoute au moins une des substances choisies parmi le groupe comprenant l'acide lactique et l'acide acétique.

14. Procédé selon la revendication précédente, caractérisé en ce qu'on introduit, dans la cuve de mélange, de 0,8 à 1,5% de la source de carbone calculé sur la quantité de l'eau.

15. Procédé selon l'une quelconque des revendications précédentes, caractérisé en ce qu'on utilise une suspension de sol présentant un pourcentage maximal d'épaisseur de pâte qui permet toujours l'agitation.

16. Procédé selon l'une quelconque des revendications précédentes, caractérisé en ce qu'on amène la suspension de sol en continu avec une préculture d'Alcaligenes eutrophus CH34.

17. Dispositif pour l'épuration d'un sol pollué par au moins un métal lourd, caractérisé en ce qu'il comprend une cuve de mélange pour le mélange de la suspension de sol et de bactéries de l'espèce Alcaligenes eutrophus qui accumulent au moins un métal lourd, ladite cuve de mélange étant munie d'un trop-plein, d'une cuve de sédimentation et d'une canalisation qui relie le trop-plein à la cuve de sédimentation.

18. Dispositif selon la revendication précédente, caractérisé en ce qu'il comprend également un dispositif de séparation physique auquel est relié le sommet de la cuve de sédimentation dans le but d'en séparer le trop-plein en boues bactériennes et en eau.

19. Dispositif selon la revendication précédente, caractérisé en ce que le dispositif de séparation physique est une cuve de flottation.

20. Dispositif selon la revendication 18, caractérisé en ce que le dispositif de séparation physique est un dispositif de centrifugation.
